# EUROPEAN PATENT APPLICATION

(11) **EP 4 783 722 A1**
(43) Date of publication of application: **29.07.2026**
(21) Application number: 24868594.3
(22) Date of filing: 12.09.2024
(51) Int. Cl.: H04W 76/12, H04L 41/0894, H04W 48/18, H04W 8/02, H04W 60/00, H04W 84/04

(54) **COMMUNICATION RELATED TO MOBILE BASE STATION**

(30) Priority: 19.09.2023 US 202363539107 P
(71) Applicant: LG Electronics Inc., Yeongdeungpo-gu Seoul 07336 (KR)
(72) Inventor: YOUN, Myungjune, Seoul 06772 (KR); KIM, Laeyoung, Seoul 06772 (KR); BYUN, Daewook, Seoul 06772 (KR); KIM, Seokjung, Seoul 06772 (KR)
(74) Representative: Mooser, Sebastian Thomas
(86) International application number: PCT/KR2024/013870
(87) International publication number: WO 2025/063616

(57) **Abstract**

Disclosed is a method. The method may comprise the steps of: receiving, from an AMF, a request message related to a PDU session; transmitting a response message to the request message to the AMF; and transmitting a message including N2 information to the AMF.

## Description

### TECHNICAL FIELD

The present disclosure relates to mobile communication.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

A scheme in which a UE is provided with a service based on a connection with a mobile base station is being discussed. However, according to the prior art, there is a problem that a service may not be effectively provided to the UE when the mobile base station is in a roaming state.

### DISCLOSURE

### TECHNICAL SOLUTION

In one aspect, a method is provided. The method may include: receiving a request message related to a PDU session from an AMF; transmitting a response message for the request message to the AMF; and transmitting a message including N2 information to the AMF.

In another aspect, an apparatus for implementing the method is provided.

In one aspect, a method is provided. The method may include receiving a PDU session establishment request message from a UE served by a mobile base station;

transmitting a NAS transport message including the PDU session establishment request message to an AMF; and receiving a PDU session resource setup request message including N2 information from the AMF.

In another aspect, an apparatus for implementing the method is provided.

### BRIEF DESCRIPTION OF THE DRAWINGS

FIG. 1 shows an example of a communication system to which implementations of the present disclosure are applied.
FIG. 2 shows an example of wireless devices to which implementations of the present disclosure are applied.
FIG. 3 shows an example of UE to which implementations of the present disclosure are applied.
FIG. 4 shows an example of 5G system architecture to which implementations of the present disclosure are applied.
FIGS. 5 and 6 show an example of a PDU session establishment procedure to which implementations of the present disclosure are applied.
FIG. 7 is an example of an architecture for communication based on a mobile base station according to an embodiment of the present disclosure.
FIG. 8 is a first example of an architecture related to a mobile base station according to the present disclosure.
FIG. 9 is a second example of an architecture related to a mobile base station according to the present disclosure.
FIGS. 10a to 10c are specific examples of a procedure according to an embodiment of the present disclosure.
FIG. 11 illustrates an example of a procedure performed according to an embodiment of the present disclosure.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G new radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

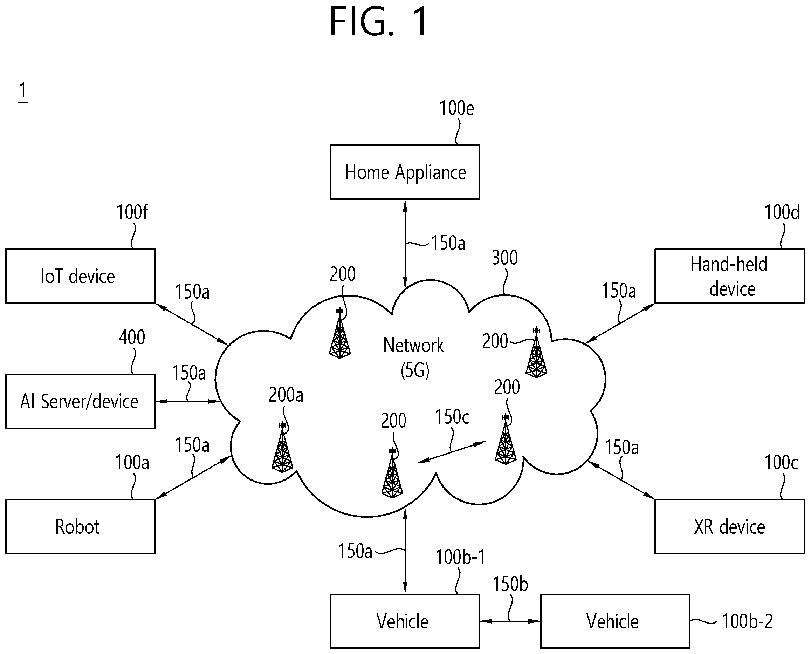

FIG. 1 shows an example of a communication system to which implementations of the present disclosure are applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally, and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally, and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

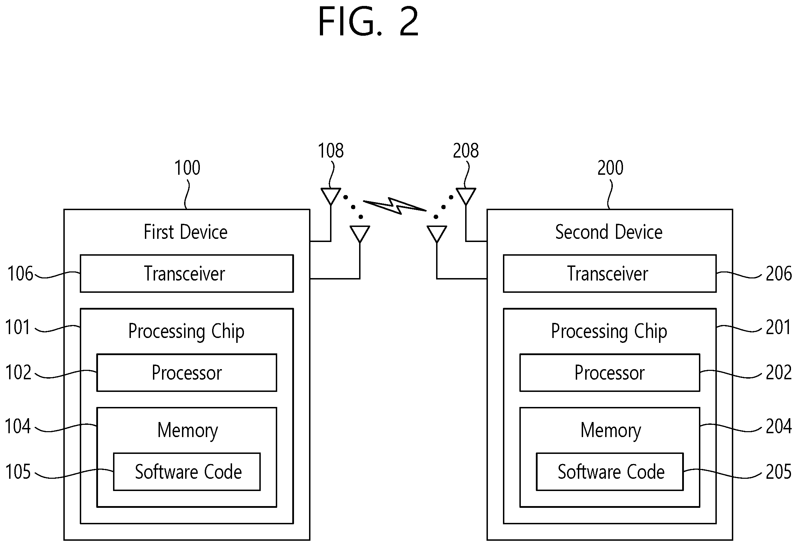

FIG. 2 shows an example of wireless devices to which implementations of the present disclosure are applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally, and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in UL and as a receiving device in DL. In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

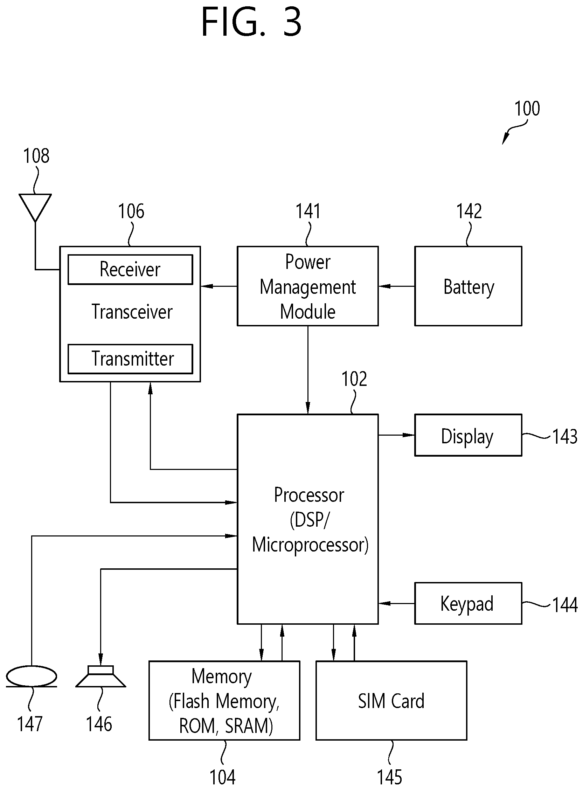

FIG. 3 shows an example of UE to which implementations of the present disclosure are applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

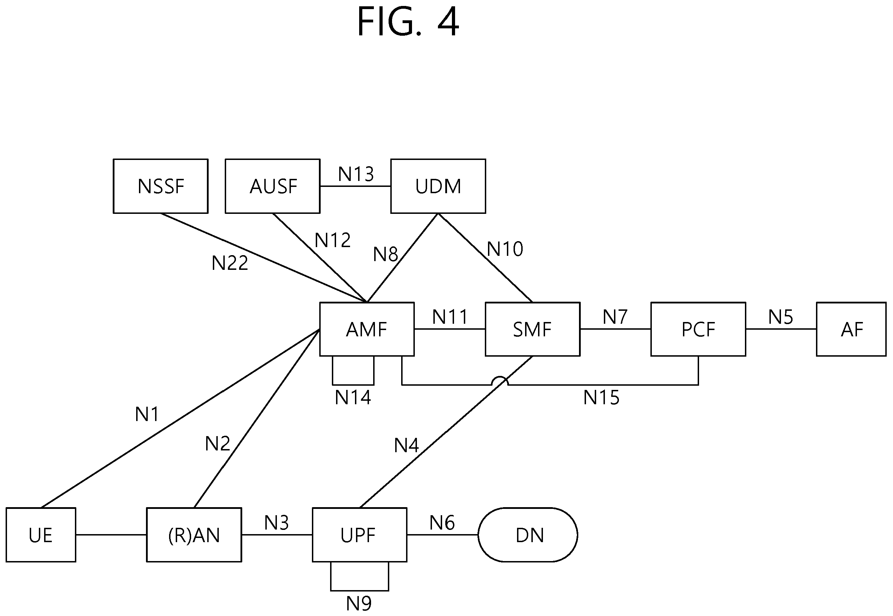

FIG. 4 shows an example of 5G system architecture to which implementations of the present disclosure are applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

A PDU session establishment procedure is described. Reference may be made to section 4.3.2 of 3GPP TS 23.502 V16.3.0 (2019-12).

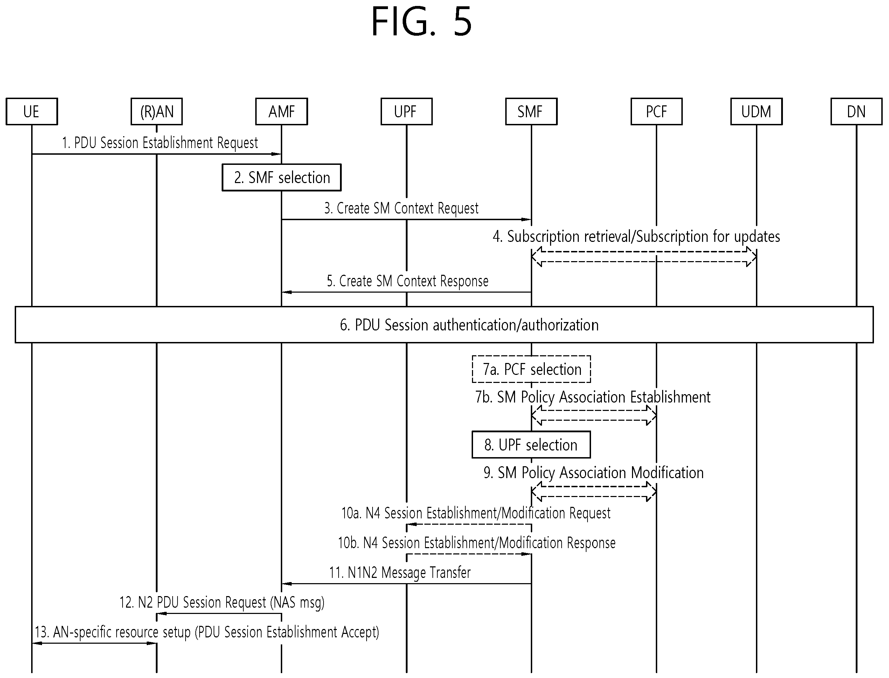

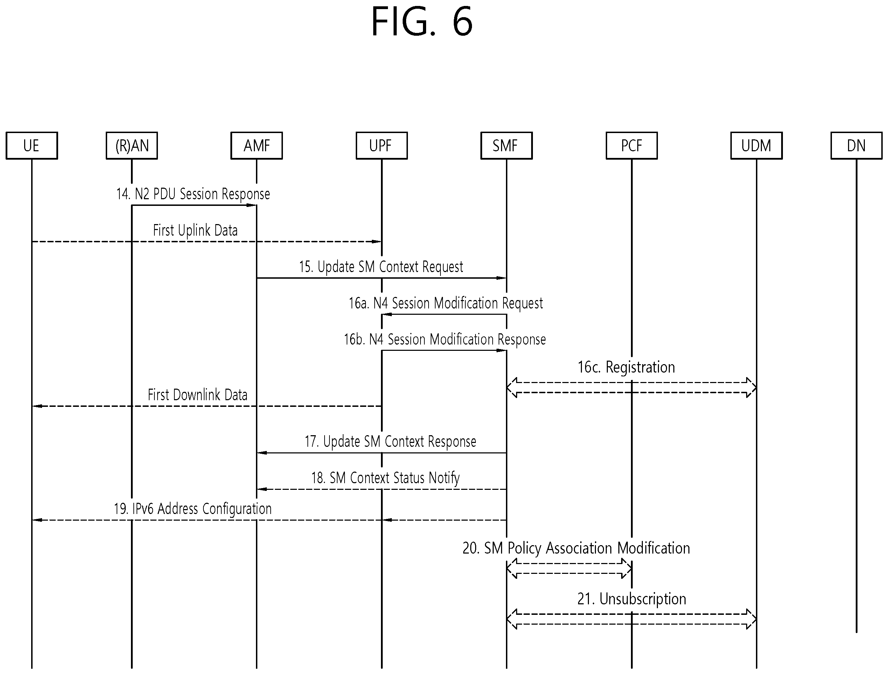

FIGS. 5 and 6 show an example of a PDU session establishment procedure to which implementations of the present disclosure are applied.

A PDU session establishment may correspond to:
- a UE initiated PDU session establishment procedure.
- a UE initiated PDU session handover between 3GPP and non-3GPP.
- a UE initiated PDU session handover from EPS to 5GS.
- a network triggered PDU session establishment procedure.

A PDU session may be associated either (a) with a single access type at a given time, i.e., either 3GPP access or non-3GPP access, or (b) simultaneously with multiple access types, i.e., one 3GPP access and one non-3GPP access. A PDU session associated with multiple access types is referred to as multi access PDU (MA PDU) session and it may be requested by access traffic steering, switching, splitting (ATSSS)-capable UEs.

FIGS. 5 and 6 specify the procedures for establishing PDU sessions associated with a single access type at a given time.

The procedure shown in FIGS. 5 and 6 assumes that the UE has already registered on the AMF thus unless the UE is emergency registered the AMF has already retrieved the user subscription data from the UDM.

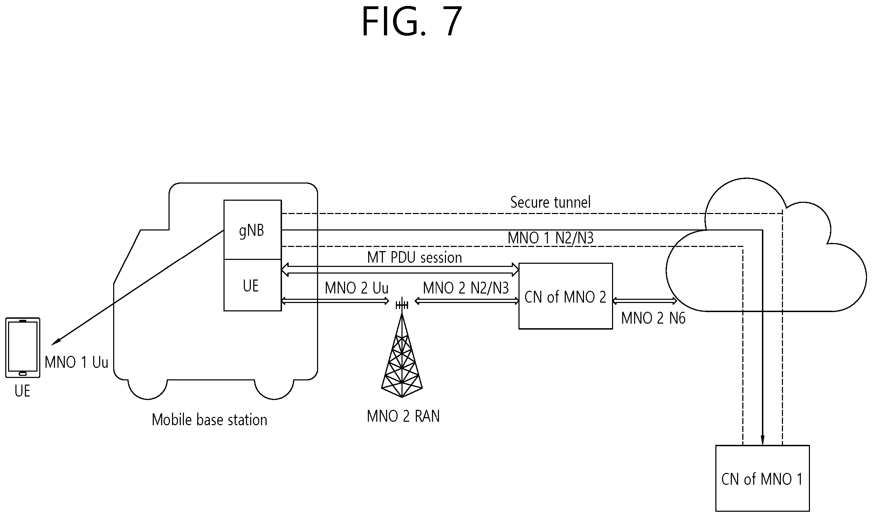

First, procedures of FIG. 7 are described.
(1) Step 1: In order to establish a new PDU session, the UE generates a new PDU session ID.

The UE initiates the UE requested PDU session establishment procedure by the transmission of a NAS message containing a PDU Session Establishment Request message within the N1 SM container. The PDU Session Establishment Request message includes a PDU session ID, Requested PDU Session Type, a Requested session and service continuity (SSC) mode, 5GSM Capability, protocol configuration options (PCO), SM PDU DN Request Container, UE Integrity Protection Maximum Data Rate, etc.

The Request Type indicates "Initial request" if the PDU session establishment is a request to establish a new PDU session and indicates "Existing PDU Session" if the request refers to an existing PDU session switching between 3GPP access and non-3GPP access or to a PDU session handover from an existing packet data network (PDN) connection in EPC. The Request Type indicates "Emergency Request" if the PDU session establishment is a request to establish a PDU session for emergency services. The Request Type indicates "Existing Emergency PDU Session" if the request refers to an existing PDU session for emergency services switching between 3GPP access and non-3GPP access or to a PDU session handover from an existing PDN connection for emergency services in EPC.

The UE includes the S-NSSAI from the Allowed NSSAI of the current access type. If the Mapping of Allowed NSSAI was provided to the UE, the UE shall provide both the S-NSSAI of the visited PLMN (VPLMN) from the Allowed NSSAI and the corresponding S-NSSAI of the HPLMN from the Mapping Of Allowed NSSAI.

(2) Step 2: The AMF selects an SMF. If the Request Type indicates "Initial request" or the request is due to handover from EPS or from non-3GPP access serving by a different AMF, the AMF stores an association of the S-NSSAI(s), the data network name (DNN), the PDU session ID, the SMF ID as well as the Access Type of the PDU session.

If the Request Type is "initial request" and if the Old PDU session ID indicating the existing PDU session is also contained in the message, the AMF selects an SMF and stores an association of the new PDU Session ID, the S-NSSAI(s), the selected SMF ID as well as Access Type of the PDU Session.

If the Request Type indicates "Existing PDU Session", the AMF selects the SMF based on SMF-ID received from UDM. The AMF updates the Access Type stored for the PDU session.

If the Request Type indicates "Existing PDU Session" referring to an existing PDU session moved between 3GPP access and non-3GPP access, then if the serving PLMN S-NSSAI of the PDU session is present in the Allowed NSSAI of the target access type, the PDU session establishment procedure can be performed in the following cases:
- the SMF ID corresponding to the PDU session ID and the AMF belong to the same PLMN;
- the SMF ID corresponding to the PDU session ID belongs to the HPLMN;

Otherwise, the AMF shall reject the PDU session establishment request with an appropriate reject cause.

The AMF shall reject a request coming from an emergency registered UE and the Request Type indicates neither "Emergency Request" nor "Existing Emergency PDU Session".

(3) Step 3: If the AMF does not have an association with an SMF for the PDU session ID provided by the UE (e.g., when Request Type indicates "initial request"), the AMF invokes Create SM Context Request procedure (e.g., Nsmf_PDUSession_CreateSMContext Request). If the AMF already has an association with an SMF for the PDU session ID provided by the UE (e.g., when Request Type indicates "existing PDU Session"), the AMF invokes Update SM Context Request procedure (e.g., Nsmf_PDUSession_UpdateSMContext Request).

The AMF sends the S-NSSAI of the serving PLMN from the Allowed NSSAI to the SMF. For roaming scenario in local breakout (LBO), the AMF also sends the corresponding S-NSSAI of the HPLMN from the Mapping Of Allowed NSSAI to the SMF.

The AMF ID is the UE's GUAMI which uniquely identifies the AMF serving the UE. The AMF forwards the PDU session ID together with the N1 SM container containing the PDU Session Establishment Request message received from the UE. The generic public subscription identifier (GPSI) shall be included if available at AMF.

The AMF provides the PEI instead of the SUPI when the UE in limited service state has registered for emergency services without providing a SUPI. In case the UE in limited service state has registered for Emergency services with a SUPI but has not been authenticated, the AMF indicates that the SUPI has not been authenticated. The SMF determines that the UE has not been authenticated when it does not receive a SUPI for the UE or when the AMF indicates that the SUPI has not been authenticated.

The AMF may include a PCF ID in the Nsmf_PDUSession_CreateSMContext Request. This PCF ID identifies the home PCF (H-PCF) in the non-roaming case and the visited PCF (V-PCF) in the LBO roaming case.

(4) Step 4: If session management subscription data for corresponding SUPI, DNN and S-NSSAI of the HPLMN is not available, then SMF may retrieve the session management subscription data from the UDM and subscribes to be notified when this subscription data is modified.

(5) Step 5: The SMF transmits either Create SM Context Response message (e.g., Nsmf_PDUSession_CreateSMContext Response) or Update SM Context Response message (e.g., Nsmf_PDUSession_UpdateSMContext Response) to the AMF, depending on the request received in step 3.

If the SMF received Nsmf_PDUSession_CreateSMContext Request in step 3 and the SMF is able to process the PDU session establishment request, the SMF creates an SM context and responds to the AMF by providing an SM Context ID.

When the SMF decides to not accept establishing a PDU session, the SMF rejects the UE request via NAS SM signaling including a relevant SM rejection cause by responding to the AMF with Nsmf_PDUSession_CreateSMContext Response. The SMF also indicates to the AMF that the PDU session ID is to be considered as released, the SMF proceeds to step 20 below, and the PDU session establishment procedure is stopped.

(6) Step 6: Optional secondary authentication/authorization may be performed.

(7a) Step 7a: If dynamic policy and charging control (PCC) is to be used for the PDU session, the SMF may perform PCF selection.

(7b) Step 7b: The SMF may perform an SM Policy Association Establishment procedure to establish an SM Policy association with the PCF and get the default PCC rules for the PDU session.

(8) Step 8: The SMF selects one or more UPFs.

(9) Step 9: The SMF may perform an SMF initiated SM Policy Association Modification procedure to provide information on the policy control request trigger condition(s) that have been met.

(10) Step 10: If Request Type indicates "initial request", the SMF may initiate an N4 Session Establishment procedure with the selected UPF. Otherwise, the SMF may initiate an N4 Session Modification procedure with the selected UPF

In step 10a, the SMF may send an N4 Session Establishment/Modification Request to the UPF and provides packet detection, enforcement and reporting rules to be installed on the UPF for this PDU session. In step 10b, the UPF may acknowledge by sending an N4 Session Establishment/Modification Response.

(11) Step 11: The SMF transmits a N1N2Message Transfer message (e.g., Namf_Communication_N1N2MessageTransfer) to the AMF.

The N1N2Message Transfer message may include N2 SM information. The N2 SM information carries information that the AMF shall forward to the (R)AN which may include:
- The CN Tunnel Info: Core network address(es) of the N3 tunnel corresponding to the PDU session;
- One or multiple quality of service (QoS) profiles and the corresponding QoS flow IDs (QFIs);
- The PDU session ID: indicate to the UE the association between (R)AN resources and a PDU session for the UE.
- S-NSSAI with the value for the serving PLMN (i.e., the HPLMN S-NSSAI or, in LBO roaming case, the VPLMN S-NSSAI).
- User Plane Security Enforcement information determined by the SMF.
- If the User Plane Security Enforcement information indicates that integrity protection is "Preferred" or "Required", the SMF also includes the UE Integrity Protection Maximum Data Rate as received in the PDU Session Establishment Request message.
- Redundancy sequence number (RSN) parameter

The N1N2Message Transfer message may include N1 SM container. The N1 SM container contains the PDU Session Establishment Accept message that the AMF shall provide to the UE. The PDU Session Establishment Accept message includes S-NSSAI from the Allowed NSSAI. For LBO roaming scenario, the PDU Session Establishment Accept message includes the S-NSSAI from the Allowed NSSAI for the VPLMN and also it includes the corresponding S-NSSAI of the HPLMN from the Mapping Of Allowed NSSAI that SMF received in step 3.

Multiple QoS Rules, QoS flow level, QoS parameters if needed for the QoS Flow(s) associated with those QoS rule(s) and QoS Profiles may be included in the PDU Session Establishment Accept message within the N1 SM container and in the N2 SM information.

If the PDU session establishment failed anywhere between step 5 and step 11, then the N1N2Message Transfer message shall include the N1 SM container with a PDU Session Establishment Reject message and shall not include any N2 SM information. The (R)AN sends the NAS message containing the PDU Session Establishment Reject message to the UE. In this case, steps 12-17 are skipped.

(12) Step 12: The AMF sends the NAS message containing PDU Session ID and PDU Session Establishment Accept message targeted to the UE and the N2 SM information received from the SMF within the N2 PDU Session Request message to the (R)AN.

(13) Step 13: The (R)AN may issue AN specific signaling exchange with the UE that is related with the information received from SMF. For example, in case of a NG-RAN, an RRC connection reconfiguration may take place with the UE establishing the necessary NG-RAN resources related to the QoS rules for the PDU session request received in step 12.

The (R)AN forwards the NAS message (PDU Session ID, N1 SM container (PDU Session Establishment Accept message)) provided in step 12 to the UE. The (R)AN shall only provide the NAS message to the UE if the AN specific signaling exchange with the UE includes the (R)AN resource additions associated to the received N2 command.

If the N2 SM information is not included in the step 11, then the following steps 14 to 16b and step 17 are omitted.

Now, procedures of FIG. 6, which follow the procedures of FIG. 5, are described.

(14) Step 14: The (R)AN transmits a N2 PDU Session Response message to the AMF. The N2 PDU Session Response message may include PDU session ID, Cause, N2 SM information (PDU Session ID, AN Tunnel Info, List of accepted/rejected QFI(s), User Plane Enforcement Policy Notification)), etc.

(15) Step 15: The AMF transmits an Update SM Context Request message (e.g., Nsmf_PDUSession_UpdateSMContext Request) to the SMF. The AMF forwards the N2 SM information received from (R)AN to the SMF.

(16a) Step S16a: The SMF initiates an N4 Session Modification procedure with the UPF. The SMF provides AN Tunnel Info to the UPF as well as the corresponding forwarding rules.

(16b) Step S16b: The UPF provides an N4 Session Modification Response to the SMF.

After this step, the UPF may deliver any DL packets to the UE that may have been buffered for this PDU session.

(16c) Step 16c: If the SMF has not yet registered for this PDU session, then the SMF may register with the UDM for a given PDU Session.

(17) Step 17: The SMF transmits an Update SM Context Response message (e.g., Nsmf_PDUSession_UpdateSMContext Response) to the AMF.

After this step, the AMF forwards relevant events subscribed by the SMF.

(18) Step 18: If during the procedure, any time after step 5, the PDU session establishment is not successful, the SMF may inform the AMF by invoking Nsmf_PDUSession_SMContextStatusNotify (Release). The SMF may also release any N4 session(s) created, any PDU session address if allocated (e.g., IP address) and release the association with PCF, if any. In this case, step 19 is skipped.

(19) Step 19: In the case of PDU Session Type IPv6 or IPv4v6, the SMF may generate an IPv6 Router Advertisement and send it to the UE.

(20) Step 20: The SMF may perform SMF initiated SM Policy Association Modification.

(21) Step 21: If the PDU Session establishment failed after step 4, the SMF may unsubscribe to the modifications of session management subscription data, if the SMF is no more handling a PDU session of the UE.

Architecture improvements for Vehicle Mounted Relays (VMR) are being discussed. For reference, the VMR is an example of a mobile base station. In the present disclosure, descriptions related to the VMR may be applied to the mobile base station.

Research on the mobile base station (e.g., VMR) is being conducted. A scope of work may be applied to an Integrated Access and Backhaul (IAB) architecture. An IAB node consists of an IAB-MT and an IAB-DU, and the IAB-DU establishes an F1 interface with a donor CU through a wireless link.

Meanwhile, there are other architecture options for achieving functions of the mobile base station (e.g., VMR). For example, a relay node includes a UE co-located with a full gNB. In addition, there is a so-called "Velcro" solution in which a gNB of a relay establishes N2 and N3 interfaces with an AMF residing in a 5GC through a PDU session.

These architecture options, which have not yet been studied, may be more suitable for specific deployment scenarios of a vehicle-mounted relay (e.g., a scenario using a VMR where IAB is not widely supported or a scenario where a relay processes local traffic of a vehicle to provide an onboard service with low latency).

Regarding the mobile base station, the following objectives need to be achieved. However, in the prior art, there was no scheme for effectively achieving these objectives.

Potential architecture and system-level improvements may be discussed to further develop functions of a base station relay mounted on a vehicle. Specific objectives are, for example, as follows:
- Identify gaps for supporting an architecture that onboards a full gNB/CU to a relay and uses a PDU session for wireless backhauling of N2/N3 interfaces.
- Enable mobility for an onboard full gNB/CU of a relay using a PDU session for wireless backhauling of N2/N3 interfaces.
- Specify architecture improvements for a selected option to enable relay authorization.
- Specify architecture improvements for a selected option to enable QoS support through a backhaul.
- Specify architecture improvements for a selected option to enable cell ID/TAC management.
- Specify architecture improvements for a selected option to enable UE location services and emergency service support.
- Specify architecture improvements for a selected option to enable an NTN backhaul for a VMR.
- Specify architecture improvements for onboard service/edge computing access.
- Specify architecture improvements for a selected option to extend UAV functions to VR.

In addition, the following use cases were discussed.

For example, transmission of vehicle relay traffic using a partner 5G network was discussed as an example of a use case.

This use case covers a specific deployment scenario. For example, according to this scenario, traffic exchanged through a vehicle relay for a user of one Mobile Network Operator (MNO) or service provider may be delivered through a transport 5G network managed by a second MNO.

Such a use case is illustrated in FIG. 7. In FIG. 7, an example is illustrated in which MNO2 provides wireless access and transmission between a vehicle relay and an MNO1 5G network to provide an End to End (E2E) connection to an MNO1 user.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

FIG. 7 is an example of an architecture for communication based on a mobile base station according to an embodiment of the present disclosure.

According to an example of FIG. 7, mobile relay traffic of MNO1 may be transmitted through a network of MNO2. The example of FIG. 7 is an example of the Velcro structure described above.

For example, a UE located at the far left is a UE of an MNO1 user. A mobile base station includes a base station (e.g., gNB) and a UE. The UE of the MNO1 user is connected to the mobile base station. The UE of the mobile base station may establish a PDU session with a CN of MNO2. Through the PDU session of the UE of the mobile base station, the base station of the mobile base station connects N2/N3 interfaces with a CN of MNO1, and the base station of the mobile base station may operate as a base station of MNO1. The base station of the mobile base station transmits a System Information Block (SIB) of MNO1 to the UE.

Such a scenario may be based on a business agreement between both parties, specific NW deployment/operation constraints, coverage requirements, and the like. For example, it may be used for the following purposes:
- A 5G mobile operator (MNO1) with a limited macro-RAN deployment and coverage footprint intends to provide 5G access and services to subscribers (moving in a vehicle or located in a specific hotspot area) by utilizing its own spectrum. MNO1 may decide to tunnel MNO1 traffic to and from a mobile base station (e.g., a vehicle relay) by utilizing a better/ubiquitous 5G radio (and transport) connection provided by a second operator (MNO2).
- A public safety provider or another service/vehicle operator may manage a specific vehicle through an onboard relay. It may provide temporary 5G subscription and connection services for a specific user category, such as emergency responders, delivery personnel, or general passengers. Since they may not own 5G spectrum or RAN/network infrastructure, they may connect to a relay (and users) using a mobile network of MNO2.

Preconditions applied to the example of FIG. 7 are as follows. In this use case, the following options are assumed:
- An access link between an MNO1 UE and a mobile base station (e.g., a vehicle relay) uses MNO1 spectrum, and the relay may be connected to an MNO2 RAN using MNO2 spectrum.
- An MNO2 transport connection between a mobile base station (e.g., a vehicle relay) and an MNO1 network is used to deliver relay traffic between the mobile base station (e.g., a vehicle relay) and an MNO1 5GC.

A service flow related to the example of FIG. 7 is as follows.
1. A mobile base station (e.g., a vehicle relay) is provisioned and configured to register with an MNO2 network and establish a required PDU session through a specific quality of service and policy (as negotiated for MNO1 traffic and subscribers).
2. A mobile base station (e.g., a vehicle relay) is provisioned and configured to be connected to a donor MNO1 network for communication between an MNO1 user and an MNO1 network.
3. An MNO1 subscriber/UE inside a vehicle camps on a mobile base station (e.g., a mobile relay). The mobile base station broadcasts an MNO1 PLMN-ID, and the MNO1 subscriber/UE inside the vehicle may register with and connect to the MNO1 network.
4. All traffic generated by an MNO1 UE through a vehicle relay is tunneled through an MNO2 5G connection of an existing relay.

Postconditions according to the example of FIG. 7 are as follows.

An MNO1 user may completely and transparently utilize a 5G service and excellent in-vehicle 5G coverage/connectivity provided by a vehicle relay.

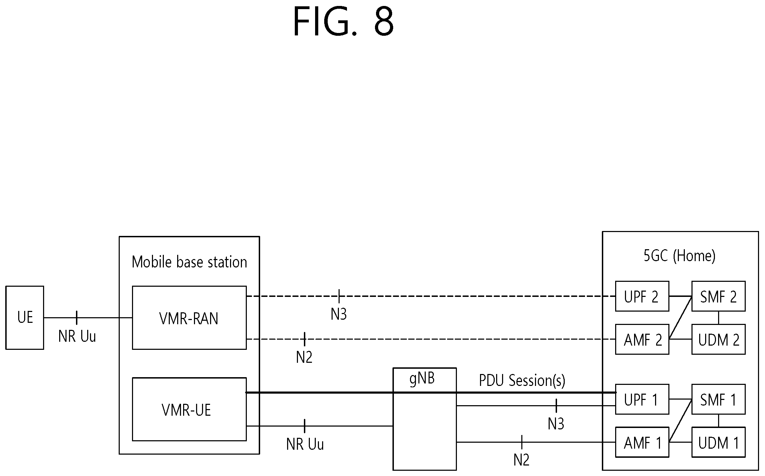

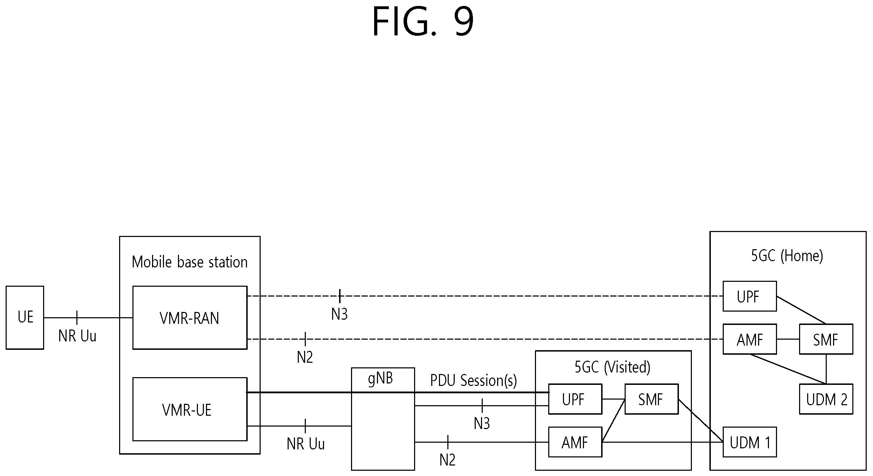

Examples of existing features covering some or all of use case functions are as follows. (Annex D) of TS 23.501 V18.0.0 describes a concept of an overlay network connection on top of an underlay network connection. This does not completely cover target use cases and requirements and is limited to a mobile BS relay. For reference, examples of an underlay network connection and an overlay network connection may be described in examples of FIGS. 8 and 9 below.

Potential new requirements needed to support use cases are as follows. A 5G system should be able to support communication with a user of one mobile operator (MNO-A) through a mobile vehicle base station relay, where relayed traffic is transmitted to an MNO-A network using a 5G connection (RAN and 5GC) provided by another mobile operator (MNO-B).

Looking at an architecture of a mobile base station (e.g., a vehicle relay) of the example of FIG. 7, a Vehicle Mounted Relay (VMR) is a relay belonging to MNO1. The mobile base station (e.g., VMR) accesses a base station and a 5GC of MNO2 to create a PDU session. The mobile base station (e.g., VMR) connects N2/N3 interfaces to a 5GC of MNO1 through the created PDU session. The mobile base station (e.g., VMR) may operate as a base station directly connected to the 5GC of MNO1 through the N2/N3 interfaces to the 5GC of MNO1. In this case, since the N2/N3 interfaces are connected to MNO1, the Vehicle Mounted Relay broadcasts an SIB of MNO1. Accordingly, terminals receiving the SIB transmitted by the mobile base station determine that they are located within network coverage of MNO1. That is, even when a terminal is actually located in a VPLMN, the terminal may determine that it is located within the network coverage of MNO1.

For reference, an architecture of a vehicle relay of FIG. 7 illustrates a scenario in which a Vehicle Relay is connected to an MNO1 network via an MNO2 network. However, this is merely an example, and the present disclosure is not limited by the example of FIG. 7. For example, the Vehicle Relay may access a base station and a 5GC of MNO1 to create a PDU session, connect N2/N3 interfaces to the 5GC of MNO1 through the created PDU session, and operate as a base station.

Hereinafter, examples of an architecture related to a mobile base station will be described with reference to examples of FIGS. 8 and 9.

FIG. 8 is a first example of an architecture related to a mobile base station.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

FIG. 8 is a first example of an architecture related to a mobile base station according to the present disclosure.

An example of FIG. 8 illustrates an example of an architecture in which both an underlay network and an overlay network of a mobile base station (e.g., a vehicle relay) are home networks.

For reference, in the present disclosure, the underlay network means a network to which a UE of the mobile base station (e.g., a VMR-UE of FIG. 8) is connected. The underlay network provides a wireless backhaul connection through a PDU session. The overlay network means a network to which a base station of the mobile base station (e.g., a VMR-RAN) is connected. The overlay network means a network to which a UE receiving a service through the mobile base station (e.g., a UE located at the far left of FIG. 8) accesses.

According to the example of FIG. 8, the UE (i.e., VMR-UE) of the mobile base station (e.g., Vehicle Relay or VMR) accesses a base station and a 5GC of the home network to create a PDU session. The RAN of the mobile base station (i.e., VMR-RAN) operates as a base station by connecting N2/N3 interfaces to the 5GC of the home network through the created PDU session.

In the example of FIG. 8, 5G Core Network Functions for the VMR-UE (i.e., AMF1, SMF1, UPF1, UDM1) and 5G Core Network Functions for a UE served by the VMR-RAN (i.e., AMF2, SMF2, UPF2, UDM2) are illustrated as different NFs. However, this is merely an example, and the scope of the present disclosure is not limited thereto. For example, some or all of these may be the same NF. For example, AMF1 and AMF2 may be the same AMF. Or UDM1 and UDM2 may be the same UDM.

FIG. 9 is a second example of an architecture related to a mobile base station.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

FIG. 9 is a second example of an architecture related to a mobile base station according to the present disclosure.

An example of FIG. 9 illustrates an example of an architecture in which an underlay network of a mobile base station (e.g., a vehicle relay) is a visited network and an overlay network is a home network.

According to the example of FIG. 9, a UE (i.e., VMR-UE) of the mobile base station (e.g., Vehicle Relay or VMR) accesses a base station and a 5GC of the visited network to create a PDU session. A base station (i.e., VMR-RAN) of the mobile base station connects N2/N3 interfaces to a 5GC of the home network through the created PDU session, and operates as a base station.

In the example of FIG. 9, a UDM (i.e., UDM1) for a VMR-UE and a UDM (i.e., UDM2) for a UE served by a VMR-RAN are illustrated as different NFs. However, this is merely an example, and the scope of the present disclosure is not limited thereto. For example, UDM1 and UDM2 may be the same UDM.

Referring to the architecture of FIG. 7 described above, an architecture when the mobile base station of FIG. 7 is in a roaming state may correspond to FIG. 9. For example, MNO1 and MNO2 of FIG. 7 may be considered to correspond to the home network and the visited network of FIG. 9, respectively.

In the example of FIG. 8 and the example of FIG. 9, a gNB (i.e., an NR base station) is illustrated as an underlay base station, but this is merely an example, and the scope of the present disclosure is not limited thereto. For example, the underlay base station may be a base station/RAN supporting another RAT.

Meanwhile, when the mobile base station (e.g., VMR) is in a roaming network, there is a problem that a terminal connected to the mobile base station (e.g., VMR) cannot receive an edge computing service.

This is because the mobile base station (e.g., VMR) needs to create an N2/N3 interface through an HPLMN 5GC of the VMR. In addition, when the mobile base station (e.g., VMR) establishes a PDU session for creating the N2/N3 interface, the mobile base station (e.g., VMR) is generally likely to create a home routed PDU session. For example, in order not to allow a connection between an internet network and the 5GC for security of the 5GC, the mobile base station (e.g., VMR) may create a home routed PDU session and connect the created PDU session to a specific DN that can be connected to the 5GC. In this case, all traffic of the mobile base station (e.g., VMR) must always be transmitted to the HPLMN. Accordingly, there is a problem that an edge computing service where delay is important cannot be provided to the UE connected to the mobile base station. For example, when the edge computing service is provided, traffic between the UE and a network should be provided based on a very short delay. However, according to the prior art, since all traffic of the mobile base station must always be transmitted to the HPLMN, there is a problem that a short delay cannot be supported.

The present disclosure proposes a method for solving such a problem.

A mobile base station (e.g., VMR) may be located in a roaming network. In this case, the mobile base station may be in a roaming state. According to the prior art, there is a problem that an edge computing service cannot be provided to a terminal connected to the mobile base station. This is because the mobile base station cannot create a session through a PLMN network. In addition, this is because the terminal and the mobile base station create a session based on an N2/N3 interface through the HPLMN 5GC of the mobile base station. A session created in the HPLMN has a problem that an edge computing service where delay is important cannot be effectively supported.

Examples of a method proposed in the present disclosure may be configured by a combination of one or more operations/configurations/steps among the following. In addition, examples of the method presented below may be performed or used in combination or complementarily.

In the present disclosure, a User Equipment (UE) and a terminal may be used as terms having the same meaning.

In the present disclosure, a subscriber and a user may be used as terms having the same meaning.

In the present disclosure, an Application Function (AF) and an Application Server (AS) may be used as terms having the same meaning.

In the present disclosure, a Vehicle Mounted Relay (VMR), a vehicle relay, a relay, a mobile relay, and a mobile base station may all be used as having the same meaning.

A mobile base station (e.g., a vehicle relay) may be mounted on various moving objects, such as a moving object on the ground (e.g., a vehicle, a train, etc.), a moving object on the sea or a river (e.g., a ship, a boat, etc.), a moving object in the air (e.g., an airplane, a helicopter, a drone, etc.), and a satellite. When mounted on a moving object in the air, the mobile base station may be referred to as an Aerial Vehicle Relay (AVR). In addition, the mobile base station (e.g., a vehicle relay) does not necessarily have to move and may perform a role of a base station while stationary.

A vehicle relay may serve not only a UE within a vehicle but also a surrounding UE.

Hereinafter, a mobile base station (e.g., a Vehicle Mounted Relay) may include a UE. This may be interpreted as the VMR including a UE part/operation/functionality or a Mobile Terminal (MT) part/operation/functionality.

A mobile base station (e.g., a Vehicle Mounted Relay) may transmit SIB information after performing registration with a 5GC.

According to the present disclosure, when an edge computing service is required, an SMF may include information related to the edge computing service in N2 information and may transmit the N2 information.

An SMF may provide edge computing to a terminal. For example, for edge computing, the SMF helps the terminal access a nearby application server according to a location of the terminal. For example, the SMF selects a UPF based on the location of the terminal and creates a user plane tunnel between the selected UPF and a base station.

However, when a terminal accesses a network through a VMR, the SMF cannot accurately know an actual location of the terminal. This is because the location of the terminal accessing through the VMR varies according to a location of the VMR.

According to the present disclosure, when a VMR transmits NAS signaling of a terminal to a core network, the VMR always transmits User Location Information (ULI) of the VMR together. An AMF receiving the ULI of the VMR may deliver the ULI of the VMR to the SMF. Through this, the SMF may recognize that the terminal has accessed through the VMR and may determine the actual location of the terminal.

In addition, it is assumed that the SMF knows that a PDU session created by the terminal is for an edge computing service based on a DNN/S-NSSAI. For example, the terminal may transmit a NAS message to the SMF to create a PDU session. In this case, the NAS message may include a specific DNN/S-NSSAI related to a creation request for the PDU session. Based on the DNN/S-NSSAI requested by the terminal, the SMF may determine that edge computing is required.

Based on this, the SMF may transmit N2 information to a VMR NG-RAN. For example, the N2 information transmitted by the SMF may include information related to a need for edge computing (or information indicating that access to a local DN is required, or information indicating that N3 user plane setup is required through an LBO PDU session, etc.; information related to various meanings may be used).

A UE of a mobile base station (e.g., VMR) receiving the information related to the need for edge computing from the SMF may perform a procedure for establishing a PDU session. For example, when establishing the PDU session, the UE of the mobile base station (e.g., VMR) may use a DNN/S-NSSAI different from a DNN/S-NSSAI used when the mobile base station (e.g., VMR) created an N2 interface. This is because, if the DNN/S-NSSAI used when creating the N2 interface is used, the mobile base station (e.g., VMR) establishes a home routed PDU session. The mobile base station creates an LBO PDU session based on the different DNN/S-NSSAI. Based on the LBO PDU session, unlike the prior art in which a user plane is created up to an HPLMN, a user plane is created directly from a local network to a local DN, and traffic between a terminal and a network may be transmitted directly from the local network to the local DN.

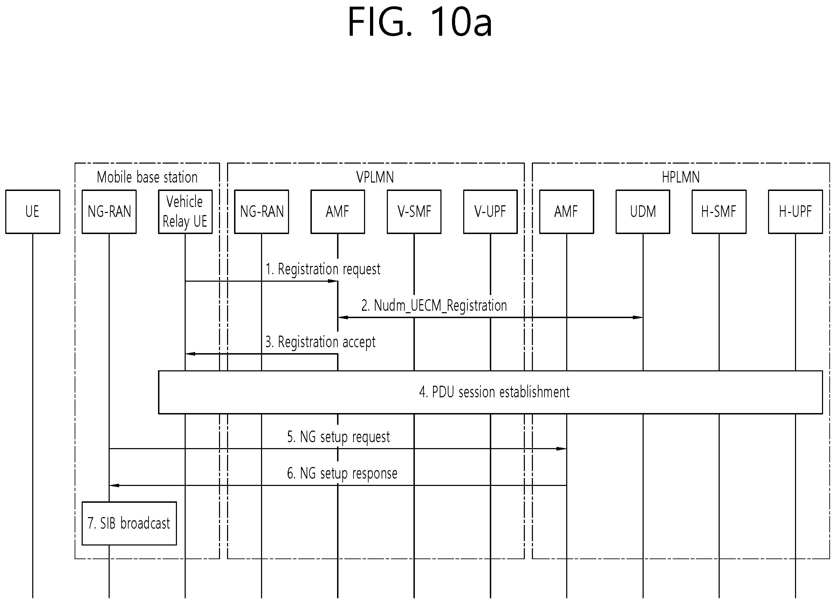

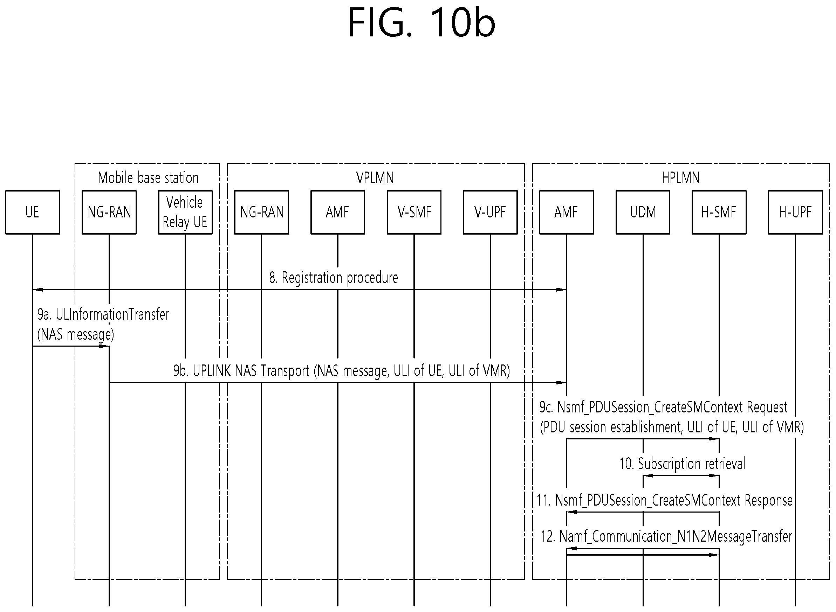

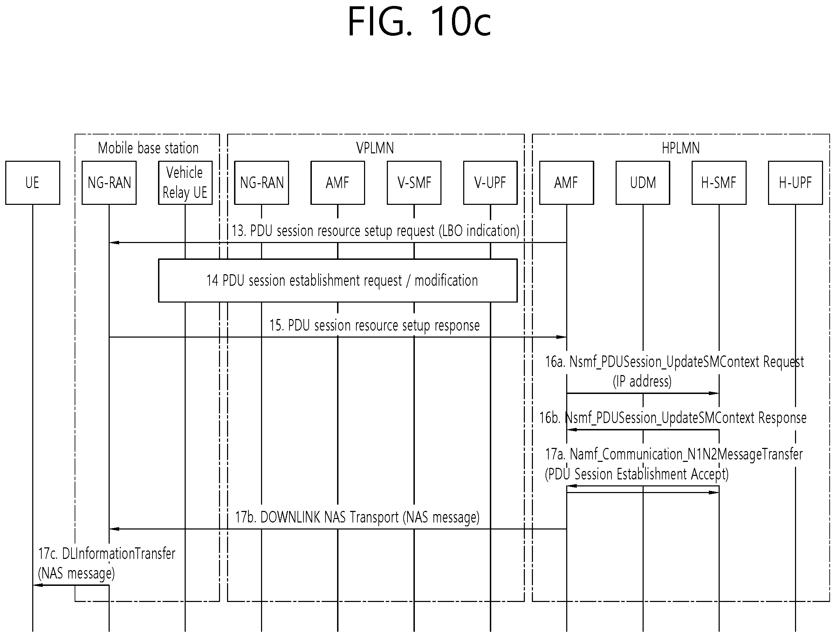

Referring to FIGS. 10a to 10c, an example in which, when an edge computing service is required, the SMF includes information related to the edge computing service in N2 information and transmits the N2 information will be described.

For reference, the procedure illustrated in FIGS. 10a to 10c does not illustrate all steps of a registration procedure but illustrates only some steps. Descriptions of steps performed in the same manner as the prior art are omitted. Procedures such as basic registration and PDU session establishment, which are not specifically described in FIGS. 10a to 10c, follow procedures of TS 23.501 V18.3.0 and TS 23.502 V18.3.0.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

**FIGS. 10a to 10c** **are specific examples of a procedure according to an embodiment of the present disclosure.**

According to FIGS. 10a to 10c, when an edge computing service is required, an SMF may transmit N2 information including information that the edge computing service is required.

A mobile base station UE (a UE included in a mobile base station) performs a registration procedure through a VPLMN. For example, the mobile base station UE may transmit a Registration Request message including information informing that it operates as a mobile base station (e.g., Vehicle Mounted Relay).

An AMF of the VPLMN performs Nudm_UECM_Registration after obtaining subscriber information from a UDM of an HPLMN. In this process, the AMF may include information informing that the UE operates as a mobile base station (e.g., Vehicle Mounted Relay) based on information received in step 1.

3. The AMF may transmit a Registration Accept message to the mobile base station UE (e.g., Vehicle Mounted Relay UE). The registration accept message may include information allowing the Vehicle Mounted Relay UE to create N2/N3 interfaces using a PDU session and/or information allowing it to operate as a mobile base station (e.g., VMR). In addition, the registration accept message may include DNN/S-NSSAI information to be used for a PDU session for creating N2/N3 interfaces with the HPLMN. Alternatively, the DNN/S-NSSAI information may be configured in the VMR. Such DNN/S-NSSAI information may be separate for information for an LBO PDU session and information for a Home Routed PDU session.

4. A PDU session establishment procedure may be performed. For an example of a specific procedure, reference may be made to FIGS. 5 and 6.

For example, the mobile base station UE (e.g., Vehicle Mounted Relay UE) may determine to establish a PDU session based on information received in step 3. For example, at this time, the mobile base station UE may create a PDU Session based on the DNN/S-NSSAI received in step 3, or based on a URSP rule, or based on configured information. Here, the configured information may mean DNN/S-NSSAI information required for the mobile base station UE to create a PDU session for creating an N2/N3 interface.

Here, the PDU session may be a home routed PDU session. In this case, the anchor UPF belongs to the HPLMN. When the anchor UPF is selected based on a DNN/S-NSSAI, a UPF co-located with an AMF of the HPLMN may be selected. In order for an SMF (e.g., H-SMF) to select the anchor UPF co-located with the AMF, a mobile base station UE (e.g., Vehicle Mounted Relay UE) may perform the following operations. For example, the mobile base station UE (e.g., Vehicle Mounted Relay UE) may transmit a PDU Session Establishment Request message including information indicating that the session is for creating an N2 interface.

In addition, a PDU session used to create the N2 interface and a PDU session used to create the N3 interface may be separately configured. In this case, the Registration accept of step 3 may include PDU session creation information (e.g., DNN/S-NSSAI) for the N2 interface and PDU session creation information (e.g., DNN/S-NSSAI) for the N3 interface, respectively. Each PDU session may be established such that one is a local breakout PDU session and the other is a home routed PDU session. For example, the PDU session for the N2 interface may be created as a home routed PDU session, and the PDU session for the N3 interface may be created as a local breakout.

The SMF may transmit a PDU session establishment accept message to the UE. For example, the SMF may include AMF address information for creating the N2 interface in the PDU Session Establishment accept message. For example, the information related to the N2 interface may be pre-configured in the SMF or may be included in subscriber information of the Vehicle Mounted Relay UE. As another example, the information related to the N2 interface may be configured in a mobile base station UE (e.g., Vehicle Mounted Relay UE), and such information may be updated in the HPLMN. Alternatively, a registration request message including information informing that the mobile base station UE (e.g., Vehicle Mounted Relay UE) operates as a Vehicle Mounted Relay may be transmitted in the VPLMN. In this case, the AMF may transmit an AMF address for creating the N2 interface to the mobile base station UE (e.g., Vehicle Mounted Relay UE) based on a local configuration or based on subscriber information obtained from the UDM.

Alternatively, if the AMF recognizes that the mobile base station UE is a UE operating as a mobile base station, when the mobile base station UE requests PDU Session Establishment, the AMF may create a PDU session using a pre-configured DNN/S-NSSAI. For example, the AMF may transmit the pre-configured DNN/S-NSSAI to the SMF regardless of the DNN/S-NSSAI transmitted by the mobile base station UE. In this case, the PDU session may be created based on a DNN/S-NSSAI different from the DNN/S-NSSAI provided by the mobile base station UE. Since the SMF always includes DNN/S-NSSAI information of a session in a PDU Session Establishment Accept message, the mobile base station UE receiving the PDU session establishment accept message may recognize a DNN/S-NSSAI related to the actually created PDU session.

5. A mobile base station (specifically, a mobile base station NG-RAN) performs an N2 Setup process. For example, the mobile base station (specifically, the mobile base station NG-RAN) may transmit an N2 Setup Request to the AMF based on the PDU session created in step 4.

6. The AMF may perform the N2 Setup process. For example, the AMF may transmit an N2 Setup Response.

7. A mobile base station (e.g., VMR) may start SIB broadcast. Accordingly, the mobile base station may start a service for the UE.

8. The UE performs a registration procedure through an NG-RAN of the mobile base station (e.g., VMR).

9a. The UE transmits a PDU session establishment request message. For example, the UE transmits an RRC message including a PDU Session Establishment Request to the NG-RAN of the mobile base station to create a PDU session.

9b. A base station (e.g., NG-RAN) of the mobile base station transmits a NAS message transmitted by a terminal to the AMF. The base station of the mobile base station transmits User Location Information (ULI) of the UE (e.g., a cell id and a TAI used in a VMR) and ULI of the VMR (e.g., a cell id and a TAI used by the VMR in a VPLMN) together with the NAS message. In addition, the base station of the mobile base station may transmit information indicating that the terminal receives a service through the VMR to the AMF together with the NAS message.

For reference, in various examples of the present disclosure, the information indicating that the terminal receives the service through the VMR may be omitted. For example, the AMF and/or the SMF may determine that the UE is served by the mobile base station based on location information of the UE, location information of the mobile base station, and a DNN and an S-NSSAI of a PDU session requested by the UE.

9c. The AMF may transmit a request message related to a PDU session (e.g., Nsmf_PDUSession_CreateSMContext Request) to the SMF. The request message related to the PDU session may include ULI of the terminal, ULI of the VMR, and information indicating that the terminal receives the service through the VMR. For example, the AMF may transmit the ULI of the terminal, the ULI of the VMR, and the information indicating that the terminal receives the service through the VMR together to the SMF while transmitting the NAS message transmitted by the terminal to the SMF.

10. The SMF obtains subscriber information for a DNN/S-NSSAI requested by the terminal from the UDM. The SMF may determine that a PDU session based on the DNN/S-NSSAI requested by the terminal should be created through a local DN (or for an edge/localized service) based on a local configuration, an operator policy, and/or a PCC rule received in a PCF association setup process, and the like. In addition, the subscriber information obtained from the UDM may include information on whether it is allowed for the terminal to create the PDU session based on the local DN through the mobile base station (e.g., VMR). In this case, the SMF may also consider subscriber information of the terminal.

11. The SMF may transmit a response message related to the PDU session to the AMF. For example, the SMF may transmit a response to a request of the AMF by transmitting an Nsmf_PDUSession_CreateSMContext Response to the AMF.

12. The SMF may transmit a message for delivering N2 information to the AMF. For example, the SMF may transmit Namf_Communication_N1N2MessageTransfer to the AMF in order to transmit the N2 information to a VMR NG-RAN. At this time, the SMF does not transmit a PDU Session Establishment Accept. That is, the SMF transmits the Namf_Communication_N1N2MessageTransfer that does not include the PDU Session Establishment Accept. Since the SMF does not include the PDU session establishment accept, after a PDU session for edge computing is established in a VPLMN in step 14, the SMF may transmit IP address information to be used by the UE to the UE in step 17.

In addition, the N2 information may include information informing that a session should be created with a local DN (or information informing that an LBO PDU session should be used or information informing that an edge/localized service should be provided). Only when a VMR is in a roaming state, the SMF may transmit such information. For example, the SMF may recognize that the VMR is roaming based on ULI of the VMR.

13. The AMF may transmit the N2 information transmitted by the SMF in step 12 to the VMR NG-RAN. For example, the AMF transmits the N2 information to the VMR NG-RAN through a PDU SESSION RESOURCE SETUP REQUEST. The PDU session resource setup request message may include an LBO indication. The LBO indication may mean, for example, information requesting the mobile base station to establish an LBO PDU session.

14. The VMR may determine to establish a PDU session based on the N2 information. For example, the N2 information may include information informing that the session should be created with the local DN. The VMR may determine to create a PDU session with a VPLMN network based on the information informing that the session should be created with the local DN.

For example, a VMR UE may create a PDU session based on a pre-configured DNN/S-NSSAI. Alternatively, the N2 information transmitted by the SMF may include a DNN/S-NSSAI to be used when creating a PDU session with the VPLMN network. In this case, the VMR UE may create a PDU session based on the DNN/S-NSSAI included in the N2 information. Alternatively, the VMR UE may create a PDU session based on the DNN/S-NSSAI received through a Registration Accept in step 3.

After the PDU session is created, if necessary, the VMR UE may perform PDU Session Modification based on the N2 information. In this case, the VMR UE may request to create a required QoS flow.

15. The VMR NG-RAN may transmit QoS information successfully performed in step 14 and failed QoS information to the SMF while sending a PDU SESSION RESOURCE SETUP RESPONSE. In addition, the VMR NG-RAN may inform the SMF of IP address information created in step 14.

16. The AMF transmits the N2 information transmitted by the NG-RAN to the SMF.

17. The SMF transmits a PDU Session Establishment Accept to the UE.

Alternatively, instead of the mobile base station creating the LBO PDU session, the mobile base station may create an HR PDU session. In addition, the SMF may use a conventional HR-SBO (refer to TS 23.548 V18.0.0 for details). To this end, an HPLMN operator may configure an SMF selected when a mobile base station (e.g., VMR) creates a PDU session for an N3 interface to be the same SMF as an SMF managing a PDU session created by the UE for an edge computing service. Based on this, the SMF allows the UE to create a session through the VMR. In addition, when the edge computing service is required, the SMF may provide a PDU session based on HR SBO for the PDU session used by the VMR UE for the N3 interface and may provide the edge computing service.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

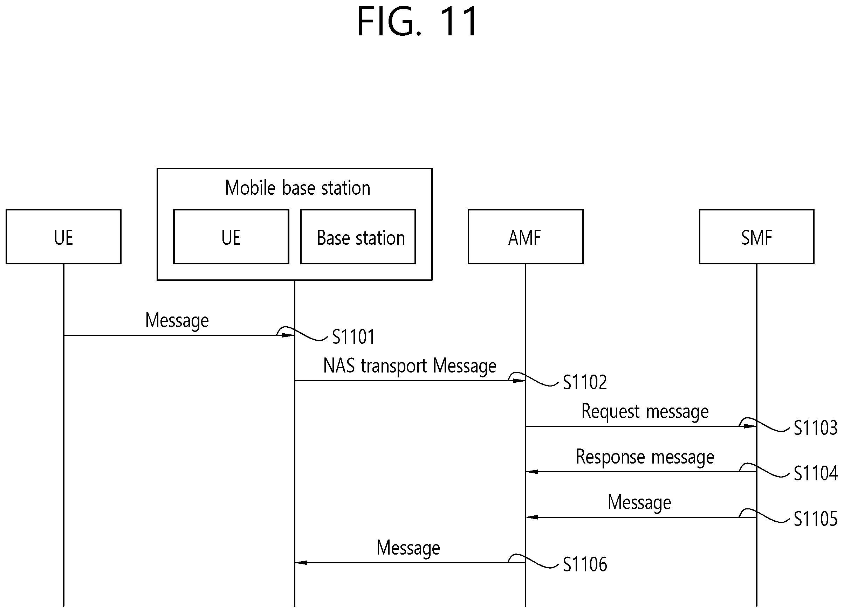

**FIG. 11** **illustrates an example of a procedure performed according to an embodiment of the present disclosure.**

For reference, the procedure illustrated in FIG. 11 is merely an example, and the scope of the present disclosure is not limited by the example of FIG. 11.

For example, regarding the example of FIG. 11, operations described in the examples of FIGS. 1 to 10c may also be applied. For example, even for operations, contents, etc., which are not directly described in the example of FIG. 11, the operations, contents, etc., described in various examples of the present disclosure may be applied.

According to the example of FIG. 11, a mobile base station may include a UE and a base station. A UE included in the mobile base station of FIG. 11 may perform a role of a relay so as to provide a service as the mobile base station to a UE served by the mobile base station.

Before step S1101 is performed, the UE of the mobile base station may perform a registration procedure in a VPLMN, as in the examples illustrated in FIGS. 10a to 10c. In addition, the UE of the mobile base station may also perform a PDU session establishment procedure for performing a mobile base station operation.

For example, the UE included in the mobile base station may transmit a registration request message including information informing that the mobile base station operates as the mobile base station to an AMF of the VPLMN.

For example, the mobile base station may receive a registration accept message from the AMF of the VPLMN.

For example, the registration accept message may include information allowing the UE included in the mobile base station to create an N2 interface and an N3 interface based on a PDU session and/or information allowing the mobile base station to operate as the mobile base station.

For example, the UE included in the mobile base station may perform the PDU session establishment procedure for creating the N2 interface and the N3 interface.

In step S1101, the UE may transmit a message to the mobile base station.

The message in step S1101 may be a PDU session establishment request message.

For example, the mobile base station may receive the PDU session establishment request message from the UE served by the mobile base station.

In step S1102, the mobile base station may transmit a NAS transport message to the AMF.

For example, the NAS transport message may be an UPLINK NAS Transport message.

For example, the NAS transport message may include location information of the UE and location information of the mobile base station.

In step S1103, the AMF may transmit a request message to the SMF.

For example, the request message may be a request message related to a PDU session.

For example, the request message may be an Nsmf_PDUSession_CreateSMContext Request message.

For example, the request message may include the PDU session establishment request message transmitted by the UE, the location information of the UE, and the location information of the mobile base station.

For example, the SMF may determine that the UE is served by the mobile base station based on the location information of the UE, the location information of the mobile base station, and a DNN and an S-NSSAI of the PDU session requested by the UE.

For example, the PDU session establishment request message may include the DNN and the S-NSSAI requested by the UE. For example, the SMF may obtain subscriber information of the UE from the UDM based on the DNN and the S-NSSAI.

For example, the subscriber information may include information on whether it is allowed for the mobile base station to establish a PDU session based on a local DN.

In step S1104, the SMF may transmit a response message to the AMF.

The response message may be an Nsmf_PDUSession_CreateSMContext Response message.

In step S1105, the SMF may transmit a message to the AMF.

For example, the message may include N2 information.

For example, the SMF may determine that the mobile base station is roaming based on the location information of the mobile base station.

For example, based on the mobile base station being roaming, the message including the N2 information may be transmitted.

For example, based on a local configuration, an operator policy, and/or a PCC rule, the SMF may determine whether to request the mobile base station to establish the PDU session based on the local DN.

For example, the N2 information may include information that the PDU session should be established based on the local DN. For example, the N2 information may include information that the PDU session should be established based on the local DN, or information that an LBO PDU session should be used, or information related to a service based on edge computing or a localized service.

For example, based on the SMF receiving the request message, the message including the N2 information may not include a PDU session establishment accept message.

For example, the N2 information may be used to request the mobile base station to establish a PDU session based on a local Data Network (DN).

The message in step S1105 may be a Namf_Communication_N1N2 Message Transfer message.

In step S1106, the AMF may transmit a message to the mobile base station.

The message in step S1106 may be a PDU session resource setup request message.

For example, the mobile base station may receive the PDU session resource setup request message including the N2 information from the AMF.

For example, based on the N2 information, the UE included in the mobile base station may perform the PDU session establishment procedure for establishing the PDU session in the VPLMN in order to establish the PDU session based on the local DN.

According to an embodiment of the present disclosure, a mobile base station (e.g., Vehicle Mounted Relay) may create an LBO PDU session in a VPLMN network based on information provided by the SMF.

The present disclosure may have various effects.

For example, when a terminal is provided with a service through a mobile base station (e.g., Vehicle Mounted Relay), edge computing may be effectively supported.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

For reference, operations of a terminal (e.g., UE) described in the present disclosure may be implemented by the devices of FIGS. 1 to 3 described above. For example, the terminal(e.g., UE) may be the first device 100 or second device 200 of FIG. 2. For example, operations of the terminal described in the present disclosure may be processed by one or more processors 102 or 202. Operations of the terminal described in the present disclosure may be stored in one or more memories 104 or 204 in the form of instructions/programs (e.g., instruction, executable code) executable by one or more processors 102 or 202. One or more processors 102 or 202 may control one or more memories 104 or 204 and one or more transceivers 105 or 206, and execute instructions/programs stored in one or more memories 104 or 204 to perform operations of the terminal (e.g., UE) described in the present disclosure.

Additionally, instructions for performing operations of the terminal (e.g., UE, relay UE, vehicle relay UE) described in the present disclosure may be stored in a non-volatile computer-readable storage medium that records them. The storage medium may be included in one or more memories 104 or 204. Instructions recorded in the storage medium may be executed by one or more processors 102 or 202 to perform operations of the terminal described in the present disclosure.

For reference, operations of network nodes (e.g., AMF, SMF, UPF, UDM, H-PCF, NEF, AF, UDR, etc.) or base stations (e.g., mobile base station, VMR, NG-RAN, gNB, etc.) described in the present disclosure may be implemented by devices of FIGS. 1 to 3 to be described below. For example, the network node or base station may be the first device 100 or second device 200 of FIG. 2. For example, operations of the network node or base station described in the present disclosure may be processed by one or more processors 102 or 202. Operations of the terminal described in the present disclosure may be stored in one or more memories 104 or 204 in the form of instructions/programs (e.g., instruction, executable code) executable by one or more processors 102 or 202. One or more processors 102 or 202 may control one or more memories 104 or 204 and one or more transceivers 106 or 206, and execute instructions/programs stored in one or more memories 104 or 204 to perform operations of the network node or base station described in the present disclosure.

Additionally, instructions for performing operations of the network node or base station described in the present disclosure may be stored in a non-volatile (or non-transitory) computer-readable storage medium that records them. The storage medium may be included in one or more memories 104 or 204. Instructions recorded in the storage medium may be executed by one or more processors 102 or 202 to perform operations of the network node or base station described in the present disclosure.

While preferred embodiments have been described exemplarily above, the present disclosure is not limited to such specific embodiments, and may be modified, changed, or improved in various forms within the scope described in the spirit and claims of the present disclosure.

In the exemplary systems described above, methods are described based on flowcharts as a series of steps or blocks, but are not limited to the order of the described steps, and some steps may occur in different orders or simultaneously with other steps than described above. Additionally, those skilled in the art will understand that the steps shown in the flowcharts are not exclusive, and other steps may be included or one or more steps of the flowcharts may be deleted without affecting the scope of rights.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method. Other implementations are within the scope of the following claims.

## Claims

1. A method comprising:
receiving, from an Access and Mobility management Function (AMF), a request message related to a Protocol Data Unit (PDU) session,
wherein the request message includes a PDU session establishment request message transmitted by a User Equipment (UE), location information of the UE, and location information of a mobile base station;
transmitting, to the AMF, a response message for the request message; and
transmitting, to the AMF, a message including N2 information,
wherein based on the request message being received, a PDU session establishment accept message is not included in the message including the N2 information, and
wherein the N2 information is used to request the mobile base station to establish a PDU session based on a local Data Network (DN).

2. The method of claim 1, further comprising:
determining that the UE is served by the mobile base station based on the location information of the UE, the location information of the mobile base station, and a DNN and an S-NSSAI of the PDU session requested by the UE.

3. The method of claim 1 or 2,
further comprising determining whether to request the mobile base station to establish the PDU session based on the local DN, based on a local configuration, an operator policy, and/or a PCC rule.

4. The method of any one of claims 1 to 3,
wherein the N2 information includes information that the PDU session should be established based on the local DN.

5. The method of any one of claims 1 to 3,
wherein the N2 information includes information that the PDU session should be established based on the local DN, information that an LBO PDU session should be used, or information related to a service based on edge computing or a localized service.

6. The method of any one of claims 1 to 5, further comprising:
determining that the mobile base station is roaming based on the location information of the mobile base station.

7. The method of any one of claims 1 to 6,
wherein based on the mobile base station being roaming, the message including the N2 information is transmitted.

8. The method of any one of claims 1 to 7,
wherein the PDU session establishment request message includes a DNN and an S-NSSAI requested by the UE,
further comprising: obtaining subscriber information of the UE from a UDM based on the DNN and the S-NSSAI,
wherein the subscriber information includes information related to whether it is allowed for the mobile base station to establish the PDU session based on the local DN.

9. A device comprising:
at least one transceiver;
at least one processor; and
at least one computer memory operably connectable to the at least one processor and storing instructions that, based on being executed by the at least one processor, perform operations comprising: any one of claims 1 to 8.

10. A method comprising:
receiving, from a User Equipment (UE) served by a mobile base station, a Protocol Data Unit (PDU) session establishment request message;
transmitting, to an Access and Mobility management Function (AMF), a Non Access Stratum (NAS) transport message including the PDU session establishment request message,
wherein the NAS transport message includes location information of the UE and location information of the mobile base station; and
receiving, from the AMF, a PDU session resource setup request message including N2 information,
wherein the N2 information is included for a Session Management Function (SMF) to request the mobile base station to establish a PDU session based on a local Data Network (DN),
wherein the N2 information does not include a PDU session establishment accept message, and
wherein based on the N2 information, a UE included in the mobile base station performs a PDU session establishment procedure for establishing a PDU session in a Visited Public Land Mobile Network (VPLMN) in order to establish a PDU session based on the local DN.

11. The method of claim 10,
wherein the N2 information includes information that the PDU session should be established based on the local DN, information that an LBO PDU session should be used, or information related to a service based on edge computing or a localized service.

12. The method of claim 10 or 11,
wherein the N2 information is received based on the mobile base station being roaming in the VPLMN.

13. The method of any one of claims 10 to 12, further comprising:
transmitting, by the UE included in the mobile base station to an AMF of the VPLMN, a registration request message including information informing that the mobile base station operates as the mobile base station; and
receiving, by the UE included in the mobile base station from the AMF of the VPLMN, a registration accept message,
wherein the registration accept message includes information allowing the UE included in the mobile base station to create an N2 interface and an N3 interface based on a PDU session and/or information allowing the mobile base station to operate as the mobile base station.

14. The method of any one of claims 10 to 13, further comprising:
performing, by the UE included in the mobile base station, a PDU session establishment procedure for creating the N2 interface and the N3 interface.

15. A device comprising:
at least one transceiver;
at least one processor; and
at least one computer memory operably connectable to the at least one processor and storing instructions that, based on being executed by the at least one processor, perform operations comprising: any one of claims 9 to 12.

16. An apparatus comprising:
at least one transceiver;
at least one processor; and
at least one computer memory operably connectable to the at least one processor and storing instructions that, based on being executed by the at least one processor, perform operations comprising: any one of claims 10 to 15.

17. A non-transitory Computer Readable Medium (CRM) storing instructions that, based on being executed by at least one processor, perform the method of any one of claims 10 to 15.
